(19) Europäisches Patentamt
European Patent Office
Office européen des brevets

(11) **EP 4 043 400 B1**

(12) **EUROPEAN PATENT SPECIFICATION**

(45) Date of publication and mention
of the grant of the patent:
**05.08.2026 Bulletin 2026/32**

(21) Application number: **20875088.5**

(22) Date of filing: **30.09.2020**

(51) International Patent Classification (IPC):
*C01G 29/00* (2006.01)  *C08K 3/30* (2006.01)
*C08L 101/00* (2006.01)  *C09D 7/61* (2018.01)
*C09D 201/00* (2006.01)  *C09K 3/00* (2006.01)

(52) Cooperative Patent Classification (CPC):
**C09D 7/61; C01G 29/00; C09D 5/004;**
C01P 2002/82; C01P 2002/84; C01P 2006/62;
C08K 2003/3009

(86) International application number:
**PCT/JP2020/037115**

(87) International publication number:
**WO 2021/070700 (15.04.2021 Gazette 2021/15)**

(54) **BISMUTH SULFIDE PARTICLES, METHOD FOR PRODUCING SAME, AND USE OF SAME**

WISMUTSULFIDTEILCHEN, VERFAHREN ZUR HERSTELLUNG DAVON UND VERWENDUNG DAVON

PARTICULES DE SULFURE DE BISMUTH, LEUR MÉTHODE DE PRODUCTION, ET LEUR UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2019 JP 2019186045**

(43) Date of publication of application:
**17.08.2022 Bulletin 2022/33**

(73) Proprietor: **Ishihara Sangyo Kaisha, Ltd.
Osaka-shi, Osaka 550-0002 (JP)**

(72) Inventor: **SANEFUJI, Norihiko
Osaka-shi, Osaka 550-0002 (JP)**

(74) Representative: **Grünecker Patent- und
Rechtsanwälte
PartG mbB
Leopoldstraße 4
80802 München (DE)**

(56) References cited:
CN-A- 102 965 735    CN-A- 107 098 387
CN-A- 107 098 387    JP-A- 2004 205 603
JP-A- H0 834 946

• XING G ET AL: "Preparation of different
morphologies of nanostructured bismuth sulfide
with different methods", MATERIALS LETTERS,
ELSEVIER, AMSTERDAM, NL, vol. 57, no. 29, 1
November 2003 (2003-11-01), pages 4555 - 4559,
XP004460699, ISSN: 0167-577X, DOI: 10.1016/
S0167-577X(03)00361-6
• LI ET AL: "Synthesis and characterization of
bismuth sulfide nanowires through microwave
solvothermal technique", MATERIALS LETTERS,
ELSEVIER, AMSTERDAM, NL, vol. 62, no. 2, 24
November 2007 (2007-11-24), pages 243 - 245,
XP022360794, ISSN: 0167-577X, DOI: 10.1016/
J.MATLET.2007.05.007

Remarks:
The file contains technical information submitted after the application was filed and not included in this specification

EP 4 043 400 B1

**Description**

**TECHNICAL FIELD**

The present invention relates to a bismuth sulfide particle, a method for producing the bismuth sulfide particle, and an application of the bismuth sulfide particle. In particular, the present invention relates to an infrared reflective material, a laser reflective material for laser imaging detection and ranging (i.e., LiDAR), a solvent composition, a resin composition, a paint composition, and a paint film containing the paint composition, each of which contains the bismuth sulfide.

**BACKGROUND ART**

Although chromium oxide is used in many conventional black pigments, there is a possibility that one part of the chromium changes from trivalent to hexavalent to become a pigment containing hexavalent chromium during the production. A pigment containing hexavalent chromium is designated as the specific chemical substance, and there is a concern in terms of the safety to the human body and the environment.

For this reason, it has been considered to use, as a black pigment, bismuth sulfide which is not designated as the specific chemical substance. For example, Patent Literature 1 discloses that bismuth sulfide particles are used as a black pigment in a light absorbing material for liquid crystal display or a paint used for a light-shielding film. The bismuth sulfide particles are obtained by adding, to an aqueous solution dissolving bismuth nitrate pentahydrate and sodium hydroxide, an aqueous solution dissolving sodium thiosulfate having the number of moles 3.3 times that of the bismuth atoms, and by heating the obtained mixture while stirring. Patent Literature 2 discloses a water-phase preparation method of a near-infrared photothermal nanomaterial bismuth sulfide comprising reacting a bismuth salt aqueous solution with a sulfide aqueous solution at 140-200 °C in a high-temperature and high-pressure hydrothermal reaction kettle. Patent Literature 3 provides a synthesis method of bismuth sulfide nanorod arrays with length-diameter ratios regulated and controlled by a solvent hydrothermal method. In the synthesis method, Bi salt is used as a Bi source and a sulfhydryl compound is used as an S source. The synthesis method comprises the step of carrying out solvothermal reaction at the temperature of 120-200 °C for 8-48 hours to obtain the $Bi_2S_3$ nanorod arrays with different length-diameter ratios on the substrate. Patent Literature 4 discloses a transfer sheet with a transfer layer via a release layer on a base material sheet made of a plastic film having a thermal-forming property. The transfer sheet consists of a coated composition having light transmittance in the infrared region while the transfer layer absorbs the light in the visible region. Patent Literature 5 discloses an infrared radiation transmitting ink composition consisting of prepolymers, monomers, photopolymerization initiators and adjuvants, and containing 70.0-90.0 wt.% of a UV radiation curing resin component or an oxidative polymerizable resin, and 10.0-30.0 wt.% of a coloring material composed of a fine powder of bismuth sulfide.

Also, Non Patent Literature 1 discloses that bismuth sulfide particles in black color can be synthesized by adding nitric acid to an aqueous solution in which bismuth nitrate and thiourea having the mole number 1.5 times that of the bismuth atoms are dissolved, and by performing the hydrothermal synthesis at a temperature of 180°C. Non Patent Literature 2 discloses the preparation of different morphologies of nanostructured bismuth sulfide ($Bi_2S_3$) including $Bi_2S_3$ nanoparticles, nanorods and bundles of nanorods by an ultrasonic-assisted liquid phase method and hydrothermal, surfactant-assisted solvothermal method, respectively. Non Patent Literature 3 discloses the preparation of one-dimensional bismuth sulfide ($Bi_2S_3$) semiconducting nanowires through a mircrowave assisted solvothermal technique.

**CITATION LIST**

**PATENT LITERATURE**

PATENT LITERATURE 1: JPH05-264984 A
PATENT LITERATURE 2: CN 107098387 A
PATENT LITERATURE 3: CN 102965735 A
PATENT LITERATURE 4: JP 2004-205603 A
PATENT LITERATURE 5: JPH08-34946 A

**NON PATENT LITERATURE**

NON PATENT LITERATURE 1: Materials Letters, Vol. 63 (2009), pp. 1496-1498
NON PATENT LITERATURE 2: Materials Letters, Vol. 57 (2003), pp. 4555-4559
NON PATENT LITERATURE 3: Materials Letters, Vol. 62 (2007), pp. 243-245

## SUMMARY OF INVENTION

### TECHNICAL PROBLEM

Although the bismuth sulfide particles produced according to a conventional method are black, the degree of blackness is not sufficient, and the desired degree of blackness has not been achieved.

### SOLUTION TO PROBLEM

As a result of intensive studies to obtain a bismuth sulfide particle having a high degree of blackness, the present inventors have found that in the reaction between a bismuth compound and a sulfur compound, the mixing ratio of these compounds affects the degree of blackness of a bismuth sulfide particle, and the bismuth sulfide particle having a higher degree of blackness than those of the conventional bismuth sulfide particles can be obtained, and thus have completed the present invention.

That is, the present invention is defined by the attached claims.

### ADVANTAGEOUS EFFECTS OF INVENTION

The bismuth sulfide particle according to the present invention has a high degree of blackness with a value of 22.0 or lower as an L* value in the L*a*b* color system.

According to the present invention, the following effects can also be provided, for example.

The bismuth sulfide particle according to the present invention can have a high infrared reflectance with a reflectance at a wavelength of 1200 nm of 30.0% or higher.

Also, the bismuth sulfide particle according to the present invention can be easily produced by the steps of: mixing a specific amount of a bismuth compound and a specific amount of a sulfur compound in an aqueous dispersion medium; and then heating the mixture.

### BRIEF DESCRIPTION OF DRAWINGS

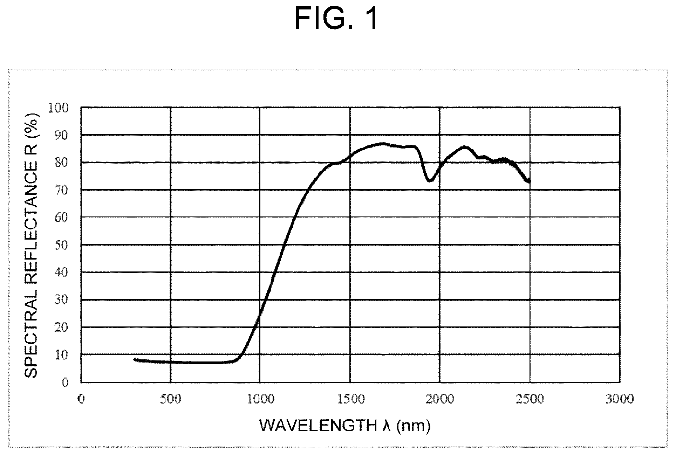

FIG. 1 is a reflectance spectrum of a powder of the bismuth sulfide particle in Example 1 of the present invention.

### DESCRIPTION OF EMBODIMENTS

The bismuth sulfide particle according to the present invention is a compound of bismuth and sulfur represented by the chemical formula $Bi(III)_2S_3$ or the like, and has a value of 22.0 or lower as an L* value of a powder of the bismuth sulfide particle in the L*a*b* color system, preferably a value of 20.0 or lower, more preferably a value of 15.0 or lower, and furthermore preferably a value of 10.0 or lower. If the L* value is the value as described above, it can be understood that the degree of blackness of the bismuth sulfide particle is sufficiently high. The L* value referred to herein is an index indicating the lightness of CIE 1976 Lab (i.e., L*a*b* color system), and the smaller the value is, the lower the lightness is. Therefore, with respect to the black pigment, the smaller the L* value is, the higher the degree of blackness (which is an indicator indicating blackness) is. The L* value can be measured with a color measurement color-difference meter or the like, and for example, a portable color-difference meter, RM-200QC (trade name) manufactured by X-Rite, Inc. can be used for the measurement.

By the way, the expression "CIE 1976 Lab (i.e., L*a*b* color system)" is referred to as a color space recommended by the Commission Internationale de l'Eclairage (i.e., CIE) in 1976, and is sometimes abbreviated as CIELAB.

Further, the bismuth sulfide particle according to the present invention preferably has a value between -2.0 or higher and 5.0 or lower as an a* value of a powder of the bismuth sulfide particle in the L*a*b* color system. Also, the bismuth sulfide particle according to the present invention preferably has a value between -3.0 or higher and 8.0 or lower as a b * value of a powder of the bismuth sulfide particle in the L*a*b* color system. Within such ranges, the bismuth sulfide particle according to the present invention can have the blackness with suppressed redness, greenness, yellowness, and blueness. The a* and b* values referred to herein are indexes indicating the hue and saturation in the L*a*b* color system. The a* value indicates that the larger to the positive side the value is, the stronger the redness is, and the larger to the negative side the value is, the stronger the greenness is. The b* value indicates that the larger to the positive side the value is, the stronger the yellowness is, and the larger to the negative side the value is, the stronger the blueness is. The above a* and b* values can be measured in a same way as the L* value.

It is preferable that the bismuth sulfide particle according to the present invention has a reflectance at a wavelength of 1200 nm of 30.0% or higher while having the L* value described above. With the above reflectance, it can be understood that the reflectance for infrared rays is sufficiently high. Further, the reflectance is more preferably 35.0% or higher, and furthermore preferably 40.0% or higher. The "infrared rays" referred to herein means electromagnetic waves at a wavelength of from 780 nm to 2500 nm.

The "reflectance" referred to herein means a proportion of the radiant flux of the bounced light to the radiant flux of the light with which an object is irradiated. The reflectance can be measured with a spectrophotometer, and for example, a UV-Visible/NIR spectrophotometer V-770 (trade name) manufactured by JASCO Corporation can be used for the measurement.

In addition, the bismuth sulfide particle according to the present invention has, as a reflectance of a powder of the bismuth sulfide particle at a wavelength of 1550 nm, a value of preferably 50.0% or higher, more preferably 60.0% or higher, and most preferably 70.0% or higher. With the above reflectance, it can also be appropriately used as a laser reflective material for laser imaging detection and ranging (i.e., LiDAR) using a wavelength of 1550 nm.

Further, the bismuth sulfide particle according to the present invention has, as a reflectance of a powder of the bismuth sulfide particle at a wavelength of 750 nm, a value of preferably 15.0% or lower, more preferably 13.0% or lower, and most preferably 11.0% or lower. Within such a range, the visible light can be sufficiently absorbed, and the degree of blackness of a powder of the bismuth sulfide particle becomes high. The "visible light" referred to herein means electromagnetic waves at a wavelength of from 380 nm to 780 nm.

The BET specific surface area value (which is measured by means of nitrogen adsorption) of the bismuth sulfide particle according to the present invention is preferably a range from 0.1 to 70 $m^2/g$ (i.e., a range from 0.1 $m^2/g$ or higher to 70 $m^2/g$ or lower), and more preferably a range from 1 to 40 $m^2/g$ (i.e., a range from 1 $m^2/g$ or higher to 40 $m^2/g$ or lower). The BET specific surface area value is furthermore preferably a range from 1.4 to 37 $m^2/g$ (i.e., a range from 1.4 $m^2/g$ or higher to 37 $m^2/g$ or lower). From this BET specific surface area value, the average particle diameter when the shape of particle is regarded as a spherical shape can be calculated by the following Formula 1. The average particle diameter calculated from this BET specific surface area value is preferably a range from 0.013 to 8.8 $\mu$m (i.e., a range from 0.013 $\mu$m or higher to 8.8 $\mu$m or lower), and more preferably a range from 0.02 to 0.88 $\mu$m (i.e., a range from 0.02 $\mu$m or higher to 0.88 $\mu$m or lower). The average particle diameter is furthermore preferably 0.023 to 0.63 $\mu$m (i.e., a range from 0.023 $\mu$m or higher to 0.63 $\mu$m or lower).

$$\text{Formula 1: } L = 6 / (\rho \cdot S)$$

Here, the above "L" represents the average particle diameter ($\mu$m), the above "$\rho$" represents the bismuth sulfide density (i.e., 6.78 $g/cm^3$), and the above "S" represents the BET specific surface area value (unit: $m^2/g$) of a sample.

The pH of a powder of the bismuth sulfide particle according to the present invention may be adjusted. The "pH of powder" referred to herein means the pH of an aqueous solution after stirring the powder in pure water. The pH of an aqueous solution can be measured with a pH meter, and for example, a pH meter D73 (trade name) manufactured by HORIBA Ltd. can be used for the measurement. As the method for adjusting the pH of the powder, for example, a leaching treatment with an acid or an alkali, or the like can be illustrated.

The present invention is a method for producing a bismuth sulfide particle, including the steps of: mixing a bismuth compound and a sulfur compound in an aqueous dispersion medium so that a ratio of the number of moles of sulfur atoms to the number of moles of bismuth atoms (i.e., a S/Bi molar ratio) is a range from 3.5 or higher to 20 or lower; and then heating the mixture. Also, the bismuth sulfide particle produced according to the method including the steps of: mixing a bismuth compound and a sulfur compound in an aqueous dispersion medium so that a ratio of the number of moles of sulfur atoms to the number of moles of bismuth atoms (i.e., a S/Bi molar ratio) is a range from 3.5 or higher to 20 or lower; and then heating the mixture is one of the embodiments of the present invention. The heating temperature is in a range from 30°C or higher to 120°C or lower.

As the sulfur compound, for example, a thiocyanate such as potassium thiocyanate, or sodium thiocyanate; a thiosulfate such as sodium thiosulfate, potassium thiosulfate, or ammonium thiosulfate; and an organic sulfur compound such as thiourea can be used. Also, the sulfur compound may be an anhydride or a hydrate, and either of them may be used. The sulfur compound is not limited to one in the form of a powder, and a mixed solution in which the powder is mixed with various kinds of solvents (e.g., water, formic acid, methanol, ethanol, 1-propanol, 2-propanol, or the like) may also be used. The mixed solution may be in a form in which the powder remains in a solvent or in a form in which the powder is dissolved in a solvent. Also, a known acid or base may be added to dissolve the powder remaining in a solvent.

As the bismuth compound, for example, bismuth sulfate, bismuth nitrate, bismuth nitrate pentahydrate, bismuth subnitrate, bismuth hydroxide, bismuth oxide, bismuth chloride, bismuth bromide, bismuth iodide, bismuth oxychloride, bismuth subcarbonate, basic bismuth carbonate, or the like can be used. The bismuth compound is not limited to one in the form of a powder, and a mixed solution in which the powder is mixed with various kinds of solvents (e.g., water, formic acid, methanol, ethanol, 1-propanol, 2-propanol, or the like) can also be used.

Also, the above bismuth compound may be produced by a known method. For example, if the bismuth compound is bismuth hydroxide, it can be produced as follows. Bismuth nitrate pentahydrate is mixed with nitric acid, and then the mixture is heated. Sodium hydroxide is added thereto, and the mixture is aged to obtain a mixed solution containing bismuth hydroxide. The obtained mixed solution is subjected to solid-liquid separation, and the solid content (specifically, bismuth hydroxide) is washed.

The above aqueous dispersion medium is one containing water as the main component, that is, the medium has a water content of 50% by mass or higher. The water content in the aqueous dispersion medium is preferably 80% by mass or higher, more preferably 90% by mass or higher, and furthermore preferably 95% by mass. Examples of the components other than water include various kinds of organic solvents (e.g., methanol, ethanol, isopropanol, butanol, acetone, methyl ethyl ketone, or tetrahydrofuran), which are soluble in water, and it is particularly preferable that ethanol is contained as such a component. The content of ethanol in the aqueous dispersion medium is preferably 10% by mass or lower. By containing the organic solvent, bismuth sulfide with a higher degree of blackness can be produced.

The above raw materials may be mixed in any order. That is, the bismuth compound and the aqueous dispersion medium are mixed in advance, and then to the mixture, the sulfur compound may be added, or the sulfur compound and the aqueous dispersion medium are mixed in advance, and then to the mixture, the bismuth compound may be added. Also, all of the raw materials may be added to the aqueous dispersion medium at one time and mixed.

In the above mixing step of raw materials, the sulfur compound and the bismuth compound are mixed so that the S/Bi molar ratio is a range from 3.5 or higher to 20 or lower. Within such a range, a bismuth sulfide particle with a higher degree of blackness can be produced. The S/Bi molar ratio is preferably a range from 5 or higher to 12.5 or lower, and more preferably a range from 7.5 or higher to 10 or lower. The S/Bi molar ratio can be calculated by dividing the number of moles of sulfur atoms in the sulfur compound by the number of moles of bismuth atoms in the bismuth compound.

Also, in the above mixing step of raw materials, an additive agent such as a dispersant, an emulsifier, a thickener, a defoamer, a surface conditioner, or an anti-settling agent can be added arbitrarily.

It is preferable to appropriately adjust the pH of the mixed solution obtained in the above mixing step depending on the raw materials used. For example, in a case where bismuth hydroxide, sodium thiosulfate, and water are used as the raw materials, it is preferable to adjust the pH of the mixed solution obtained after the mixing step to 5 or lower. It is more preferable to adjust the pH to 4 or lower, and furthermore preferable to adjust the pH to 3 or lower. The pH adjusting agent is not particularly limited, and a known agent such as sulfuric acid, nitric acid, hydrochloric acid, sodium hydroxide, or potassium hydroxide can be used. However, the sulfuric acid used herein is not contained in the above sulfur compound.

In the mixing of the above raw materials, a known blender such as a stirrer, a mixer, a homogenizer, or an agitator can be used.

A bismuth sulfide particle can be produced by heating the mixed solution obtained in the above mixing step. The heating temperature is in a range from 30°C or higher to 120°C or lower, and by the heating at such a temperature, bismuth sulfide with a higher degree of blackness can be produced. The heating temperature is furthermore preferably a range from 40°C or higher to 120°C or lower, and still more preferably a range from 50°C or higher to 90°C or lower.

Although the heating time at the above temperature can be set arbitrarily, this heating time is preferably a range from 0.5 to 10 hours (i.e., a range from 0.5 hours or higher to 10 hours or lower).

After the heating step, arbitrarily, the mixed solution may be evaporated and dried or may be subjected to solid-liquid separation. In the solid-liquid separation, a known filtration method can be used, and for example, a filtration device by pressure filtration such as a rotary press or a filter press, each of which is usually industrially used, or a vacuum filtration device such as Nutsche or Moore filter can be used. Further, centrifugation or the like can also be used. At that time, washing with pure water or the like may be performed arbitrarily.

Also, a step of drying the solid content obtained by the above solid-liquid separation may be included. In a case of including such a drying step, the drying temperature and the drying time can be set arbitrarily. For example, the drying temperature is preferably a range from 30°C or higher to 120°C or lower, and the drying time is preferably a range from 0.5 to 10 hours (i.e., a range from 0.5 hours or higher to 10 hours or lower). In the drying step, for example, heating equipment such as a dryer, an oven, or an electric furnace can be used.

The particle size of the bismuth sulfide particle produced according to the above method may be appropriately adjusted using a known crusher, classifier, or the like.

The bismuth sulfide particle produced according to the method as described above can be confirmed to be bismuth sulfide by means of an X-ray diffraction method or the like. For example, the produced bismuth sulfide particle can be identified on the basis of the spectrum measured using an x-ray diffractometer, Ultima IV (trade name) manufactured by Rigaku Corporation.

The surface of the bismuth sulfide particle according to the present invention may be coated with various kinds of inorganic compounds or organic compounds. As the inorganic compound, for example, an oxide and/or a hydrous oxide, of a metal such as silicon, aluminum, titanium, zirconium, tin, or antimony can be illustrated. Also, as the organic compound, an organic silicon compound, an organometallic compound, and an organic compound such as a polyol-based, an amine-based, or a carboxylic acid-based (specifically, trimethylol methane, trimethylol ethane, trimethylol propane, pentaerythritol, dimethylethanolamine, triethanolamine, stearic acid, oleic acid, or a salt thereof) can be illustrated. The surface of the bismuth sulfide particle may be coated with the above inorganic compound, and then further coated with the above organic compound. The coating amount of the inorganic compound or the organic compound can be appropriately set.

As the method for coating the surface of the bismuth sulfide particle with the inorganic compound or the organic compound, a conventional surface treatment method of a titanium dioxide pigment or the like can be used. Specifically, it is preferable to add an inorganic compound or an organic compound to a slurry of the bismuth sulfide particles to perform their coatings, and it is more preferable to neutralize the inorganic compound or the organic compound in the slurry and to perform their coatings by the precipitation. Also, an inorganic compound or an organic compound may be added to and mixed with a powder of the bismuth sulfide particles to perform their coatings.

The bismuth sulfide of the present invention may be subjected to a leaching treatment using an acid or an alkali. Examples of the acid used for the leaching treatment include inorganic acids such as hydrochloric acid, sulfuric acid, nitric acid, and hydrofluoric acid, and examples of the alkali include sodium hydroxide and potassium hydroxide.

The bismuth sulfide particle according to the present invention can be used as a black pigment by utilizing the pigment characteristics of the bismuth sulfide particle. Also, by utilizing the characteristic of reflecting infrared rays of the bismuth sulfide particle together, the bismuth sulfide particle can be used as an infrared reflective material. In a case of using as the infrared reflective material, the bismuth sulfide particle according to the present invention may be used in combination with another coloring agent or infrared reflection agent.

Also, the bismuth sulfide particle according to the present invention can be appropriately used as a laser reflective material for laser imaging detection and ranging (i.e., LiDAR). For the LiDAR, for example, a laser with a wavelength of 1550 nm can be used, and if the reflectance is as shown in FIG. 1 at a wavelength of 1550 nm of the bismuth sulfide particle according to the present invention, such a bismuth sulfide particle can be sufficiently used as the laser reflective material for LiDAR.

The bismuth sulfide particle according to the present invention and an infrared reflective material containing the bismuth sulfide particle can be mixed with a solvent to be prepared as a dispersion or a suspension (wherein the dispersion and the suspension are collectively referred to as "solvent composition"). Examples of the solvent used for the dispersion or the suspension include: a water solvent; a non-aqueous solvent such as an alcohol (e.g., methanol, butanol, ethylene glycol, or the like), an ester (e.g., ethyl acetate, or the like), an ether, a ketone (e.g., acetone, methyl ethyl ketone, or the like), an aromatic hydrocarbon (e.g., toluene, xylene, mineral spirit, or the like), or an aliphatic hydrocarbon; and a mixed solvent thereof. The dispersion or the suspension may arbitrarily contain an additive agent such as a dispersant, an emulsifier, an anti-freezing agent, a pH adjusting agent, a thickener, or a defoamer. The bismuth sulfide concentration in such a solvent composition can be appropriately set.

In the mixing step of preparing the above dispersion or the above suspension, a known blender can be used. Also, degassing may be arbitrarily performed during the mixing. Examples of the blender include a two-shaft mixer, a three-roll, and a sand mill, which are usually industrially used. In a case where the blender is used on a laboratory scale, a homogenizer, a paint shaker, or the like can be used. In this case, a crushing medium containing glass, alumina, zirconia, zirconium silicate, or the like as the component may be arbitrarily used.

The bismuth sulfide particle according to the present invention and an infrared reflective material containing the bismuth sulfide particle can be mixed with a resin to be prepared as a resin composition. Examples of the resin used in the resin composition include the following ones, but the resin is not particularly limited to them.

Examples of the thermoplastic resin include

(1) a general-purpose plastic resin (for example, (a) polyolefin resin (such as polyethylene or polypropylene), (b) polyvinyl chloride resin, (c) acrylonitrile-butadienestyrene resin, (d) polystyrene resin, (e) methacrylic resin, (f) polyvinylidene chloride resin, or the like),
(2) an engineering plastic resin (for example, (a) polycarbonate resin, (b) polyethylene terephthalate resin, (c) polyamide resin, (d) polyacetal resin, (e) modifiedpolyphenylene ether, (f) fluorine resin, or the like), and
(3) a super engineering plastic resin (for example, (a) polyphenylene sulfide resin (i.e., PP), (b) polysulfone resin (i.e., PSF), (c) polyether sulfone resin (i.e., PES), (d) amorphous polyarylate resin (i.e., PAR), (e) liquid crystal polymer (i.e., LCP), (f) polyether ether ketone resin (i.e., PEEK), (g) polyamideimide resin (i.e., PAI), (h) polyetherimide resin (i.e., PEI), or the like).

Examples of the thermosetting resin include (a) epoxy resin, (b) phenol resin, (c) unsaturated polyester resin, (d) polyurethane resin, (e) melamine resin, and (f) silicone resin.

Examples of the thermoplastic elastomer include a styrene-based, an olefin/alkene-based, a vinyl chloride-based, a urethane-based, and an amide-based.

Also, in the above resin composition, various additive agents such as a dispersant, an emulsifier, a flame retardant, an anti-freezing agent, a pH adjusting agent, a thickener, a defoamer, a UV absorber, and an antioxidant can be arbitrarily contained. The bismuth sulfide concentration in such a resin composition can be appropriately adjusted, and the resin composition can also be prepared as a high-concentration masterbatch.

In the step of mixing with the above resin composition, a similar method to the mixing step at the time of preparing the above dispersion or the above suspension can be used.

The bismuth sulfide particle according to the present invention and an infrared reflective material containing the bismuth sulfide particle can be mixed with a resin for a paint to be prepared as a paint composition. The resin for a paint is not particularly limited as long as it is generally used in paint applications, and as the resin for a paint, various kinds of resins for a paint, for example, a phenol resin, an alkyd resin, an acrylic alkyd resin, an acrylic resin, an acrylic emulsion resin, a polyester resin, a polyester urethane resin, a polyether resin, a polyolefin resin, a polyurethane resin, an acrylic urethane resin, an epoxy resin, a modified epoxy resin, a silicone resin, an acrylic silicone resin, a fluorine resin, an ethylene-vinyl acetate copolymer, an acrylic-styrene copolymer, an amino resin, a methacrylic resin, a polycarbonate resin, a polyvinyl chloride resin, and the like can be used.

The above paint composition can arbitrarily contain various kinds of additive agents, a solvent, and the like. Examples of the additive agent include various kinds of dispersants, emulsifiers, anti-freezing agents, pH adjusting agents, thickeners, defoamers, which are generally used. Examples of the solvent include: a water solvent; a non-aqueous solvent such as an alcohol (e.g., methanol, butanol, ethylene glycol, or the like), an ester (e.g., ethyl acetate, or the like), an ether, a ketone (e.g., acetone, methyl ethyl ketone, or the like), an aromatic hydrocarbon (e.g., toluene, xylene, mineral spirit, or the like), or an aliphatic hydrocarbon; and a mixed solvent thereof. The bismuth sulfide concentration in such a paint composition can be appropriately adjusted.

In the step of mixing with the above resin, a similar method to the mixing step at the time of preparing the above dispersion or the above suspension can be used.

By applying the above dispersion or the above suspension, or the above paint composition to a substrate and curing it, a paint film can be obtained. Also, the paint film can be used as a black paint film or a shielding paint film for infrared rays. Also, the paint film can be used as a heat-shielding paint film.

As the method for applying the above dispersion or the above suspension or the above paint composition to a substrate, a general method such as spin coating, spray coating, roller coating, dip coating, flow coating, knife coating, electrostatic coating, bar coating, die coating, brush coating, or a method of dropping droplets can be used without any limitation. The instrument used for the application of the above dispersion or the above suspension, or the above paint composition can be appropriately selected from known instruments such as a spray gun, a roller, a brush, a bar coater, and a doctor blade. By applying the above dispersion or the above suspension, or the above paint composition to a substrate and then curing it, a paint film can be obtained. Also, baking may be performed after the drying. The baking conditions can be appropriately set, and for example, the baking time can be set to about 1 to 120 minutes in the temperature range from 40°C or higher to 200°C or lower in an oxidizing atmosphere. With such setting conditions, sufficient baking can be performed in a drying furnace of coil coating line.

Also, examples of the substrate to which the dispersion or the above suspension, or the paint composition is applied include a ceramic product, a glass product, a metal product, a plastic product, and a paper product.

The above paint film can have the characteristics of black pigment which the bismuth sulfide of the present invention has. For example, the L* value of the above paint film in the L*a*b* color system can be 10.0 or lower, and preferably 7.0 or lower.

In a case of measuring the L* value of the above paint film, for example, this paint film is formed by preparing a paint composition having a pigment weight concentration (i.e., PWC) of 29.60% and applying the prepared paint composition to a black-and-white chart sheet with the use of a bar coater with wire number 60 so that the thickness of the dried paint film is 67 $\mu$m. For the paint film formed on a white background of the black-and-white chart sheet, the L* value, a* value, and b* value are measured using a color-difference meter. As the color-difference meter, for example, RM-200QC (trade name) manufactured by X-Rite, Inc., or the like can be used.

Also, the above paint film can have the infrared reflection characteristic which the bismuth sulfide particle of the present invention has. For example, the solar reflectance of the paint film at a wavelength of from 780 nm to 2500 nm can be 20.0% or higher, and preferably 30.0% or higher. Further, in such a paint film, a certain degree of solar reflectance is ensured, and thus the temperature rise on a surface of the paint film can also be suppressed as compared with a general black pigment.

In a case of measuring the solar reflectance of the paint film at a wavelength of from 780 nm to 2500 nm, for example, this paint film is formed by preparing a paint composition having a pigment weight concentration (i.e., PWC) of 29.60%, and applying the prepared paint composition to a black-and-white chart sheet with the use of a bar coater with wire number 60 so that the thickness of the dried paint film is 67 $\mu$m. For the paint film formed on a white background of the black-and-white chart sheet, the reflectance at a wavelength of from 780 nm to 2500 nm is measured using a spectrophotometer, and the solar reflectance at a wavelength of 780 nm to 2500 nm can be calculated using a method described in JIS K 5602.

As the spectrophotometer, for example, a UV-Visible/NIR spectrophotometer V-770 (trade name) manufactured by JASCO Corporation, or the like can be used.

Also, in a case of measuring the surface temperature of the paint film, for example, this paint film is formed by preparing a paint composition having a pigment weight concentration (i.e., PWC) of 29.60%, and applying the prepared paint composition to a black-and-white chart sheet with the use of a bar coater with wire number 60 so that the thickness of the dried paint film is 67 $\mu$m. The paint film formed on a white background of the black-and-white chart sheet is irradiated with infrared rays from above the paint film, and the surface temperature of the paint film after irradiation is measured. For the irradiation with infrared rays, for example, Eye R-type infrared lamp (trade name) manufactured by IWASAKI ELECTRIC Co., Ltd. or the like can be used.

Further, when the weather resistance of the above paint film was evaluated, the paint film showed excellent weather resistance as compared with a paint film using a general black pigment.

The above weather resistance can be evaluated by the time required for reaching a predetermined value of the color difference of a paint film between before and after exposure test, and the longer the time required is, the better the weather resistance is. The method of the "exposure test" referred to herein is not particularly limited, and an outdoor exposure test, or an exposure test using equipment for accelerated weathering test can be used. Examples of the equipment for accelerated weathering test include a sunshine carbon arc lamp-type weather resistance testing machine (i.e., sunshine weather meter), a dew-cycle weather resistance testing machine, a UV-ray carbon arc lamp-type weather resistance testing machine, and a xenon arc lamp-type weather resistance testing machine.

In a case of calculating the color difference of a paint film, for example, this paint film is formed by preparing a paint composition having a pigment weight concentration (i.e., PWC) of 29.60%, and applying the prepared paint composition to a primer (specifically, zinc phosphate) treated steel sheet with the use of a bar coater with wire number 60 so that the thickness of the dried paint film is 67 $\mu$m, and a test piece is prepared. The test piece is subjected to an exposure test using a sunshine weather meter, the L* value, a* value, and b* value of the paint film after the exposure test are measured using a colorimeter, and the color difference was calculated by a method described in JIS K 5600. As the sunshine weather meter, for example, S80 (trade name) manufactured by Suga Test Instruments Co., Ltd. can be used, and as the colorimeter, for example, a spectrophotometer SD5000 (trade name) manufactured by NIPPON DENSHOKU INDUSTRIES CO., LTD. or the like can be used.

## EXAMPLES

Hereinafter, Examples of the present invention will be described, but the present invention is not limited to the Examples.

<Method for measuring L* value, a* value, and b* value of powder in L*a*b* color system>

A sample was sufficiently crushed in an agate mortar, and then the crushed sample was placed in an aluminum ring having a diameter ($\Phi$) of 20 mm, a load of 30 MPa was applied thereto to perform press-molding, and the L* value, a* value, and b* value were measured using a portable color-difference meter, RM-200QC (trade name) manufactured by X-Rite, Inc.

<Measurement of reflectance of powder>

A sample was sufficiently crushed in an agate mortar, and then the crushed sample was placed in a cell for measurement (specifically, powder cell PSH-002 manufactured by JASCO Corporation), and set as the sample for measurement. The sample for measurement was attached to an integrating sphere unit (specifically, type ISN-923 manufactured by JASCO Corporation), and the reflectance at a wavelength of from 300 nm to 2500 nm was measured using a UV-Visible/NIR spectrophotometer V-770 (trade name) manufactured by JASCO Corporation.

<Measurement of pH of powder>

1.0 g of a sample was weighed in a 200-mL beaker, 100 mL of pure water was placed into the beaker to prepare an aqueous solution, and the aqueous solution was subjected to ultrasonic dispersion for 5 minutes. After that, the pH of the aqueous solution was measured using a pH meter (specifically, pH meter D73 (trade name) manufactured by HORIBA Ltd.).

<Measurement of powder X-ray diffraction spectrum>

After a sample was sufficiently crushed in an agate mortar, the crushed sample was placed in a cell for measurement, and the powder X-ray diffraction spectrum of the crushed sample was measured using a sample horizontal multipurpose x-ray diffraction apparatus, Ultima IV (trade name) manufactured by Rigaku Corporation. The obtained spectrum was collated using ICSD (i.e., a database of inorganic crystal structures) provided by the Japan Association for International Chemical Information, and the sample was identified. The spectrum was collected under the following measurement conditions.

(1) Optical system

(a) Divergence slit: 1°
(b) Scattering slit: 1°
(c) Light-receiving slit: 0.15 mm
(d) Monochromatic light-receiving slit: 0.8 mm

(2) X ray

(a) Wavelength: CuK$\alpha$ ray 1.541 Å
(b) Current of bulb: 50 mA
(c) Voltage of bulb: 50 kV

(3) Measurement range: 5 to 70 deg.
(4) Scanning method

(a) Scan speed: 5°/minute
(b) Step width: 0.02 deg.

<Preparation of bismuth hydroxide>

116.8 g of 60% nitric acid (manufactured by NACALAI TESQUE, INC.) was added into 277.6 g of pure water to prepare an aqueous solution, and into the aqueous solution, 146.1 g of bismuth nitrate pentahydrate (manufactured by KANTO CHEMICAL CO., INC.) was further added and mixed. Into the mixed solution, 1459.5 g of pure water was added to prepare a bismuth nitrate mixed solution. Into 4 L of pure water heated to 70°C, the bismuth nitrate mixed solution and a 3 N aqueous sodium hydroxide solution were added while keeping the pH 6.5 to 7.5. After that, the obtained mixed solution was aged for 10 minutes to prepare a mixed solution containing bismuth hydroxide, the mixed solution was subjected to solid-liquid separation by suction filtration, the obtained solid content was washed with pure water, and was collected as bismuth hydroxide.

<Preparation of bismuth sulfide>

(Example 1)

Pure water was added to the above-obtained bismuth hydroxide so that an aqueous solution of the bismuth hydroxide having a concentration of 0.08 mol/L was obtained, and 3.45 L of slurry was prepared. Further, pure water was added to sodium thiosulfate (manufactured by NACALAI TESQUE, INC.) so that an aqueous solution of the sodium thiosulfate having a concentration of 0.68 mol/L was obtained, and 1.98 L of sodium thiosulfate mixed solution was prepared. Next, the sodium thiosulfate mixed solution was added into the bismuth hydroxide slurry. The S/Bi molar ratio in the mixing amounts was 10. Into the obtained mixed solution, 150 g of nitric acid diluted to a concentration of 30% was added. The pH of the mixed solution after the addition of nitric acid was 1.8. The obtained mixed solution was heated to 70°C, and stirred for 2 hours to obtain black precipitate in the mixed solution. The black precipitate was collected by means of suction filtration, washed with pure water, and dried under the conditions of 100°C for 3 hours to obtain "Sample 1" of "Example 1". When measuring the a* value and b* value of the obtained Sample 1, a* = 0.1 and b* = -0.4 were obtained, respectively. Further, when measuring the pH of its powder, the pH value was 3.2.

(Example 2)

"Sample 2" was obtained in a similar manner to "Example 1" except that the S/Bi molar ratio in "Example 1" was changed to 5. When measuring the a* value and b* value of "Sample 2", a* = 0.1 and b* = 1.2 were obtained, respectively.

(Example 3)

"Sample 3" was obtained in a similar manner to "Example 1" except that the S/Bi molar ratio in "Example 1" was changed to 7.5. When measuring the a* value and b* value of "Sample 3", a* = 0.2 and b* = -1.0 were obtained, respectively.

(Example 4)

"Sample 4" was obtained in a similar manner to "Example 1" except that the S/Bi molar ratio in "Example 1" was changed to 15. When measuring the a* value and b* value of "Sample 4", a* = 0.0 and b* = 2.9 were obtained, respectively.

(Example 5)

"Sample 5" was obtained in a similar manner to "Example 1" except that the heating temperature in "Example 1" was changed to 30°C. When measuring the a* value and b* value of "Sample 5", a* = 1.8 and b* = 4.2 were obtained, respectively.

(Example 6)

Sample 6 was obtained in a similar manner to Example 1 except that the heating temperature in "Example 1" was changed to 90°C. When measuring the a* value and b* value of Sample 6, a* = 0.2 and b* = 0.2 were obtained, respectively.

(Example 7)

"Sample 7" was obtained in a similar manner to "Example 1" except that the heating temperature in "Example 1" was changed to 120°C. When measuring the a* value and b* value of "Sample 7", a* = -0.1 and b* = 0.8 were obtained, respectively.

(Example 8)

"Sample 8" was obtained in a similar manner to "Example 1" except that the bismuth hydroxide in "Example 1" was changed to bismuth nitrate pentahydrate (manufactured by KANTO CHEMICAL CO., INC.) and the pH adjusting agent to be added after the mixing step of raw materials in "Example 1" was changed to sodium hydroxide. The pH of the aqueous solution after the addition of sodium hydroxide was 4.9. When measuring the a* value and b* value of the obtained "Sample 8", a* = -0.3 and b* = 1.5 were obtained, respectively.

(Example 9)

The black precipitate obtained in a similar manner to "Example 1" was washed with pure water, and then pure water was added to the washed black precipitate without drying so that an aqueous solution of the black precipitate having a concentration of 50 g/L was obtained, and the aqueous solution was stirred to prepare a slurry. The slurry was transferred to a beaker and heated up to 70°C, and 2.0% by mass of sodium aluminate in terms of $Al_2O_3$ with regard to the black precipitate was added thereto over 20 minutes while stirring well. After the addition, the pH of the slurry was adjusted to 7.0 using 20% by mass sulfuric acid. After that, the resultant slurry was stirred for 1 hour. The obtained slurry was filtered, washed, and dried under the conditions of 100°C for 3 hours to obtain "Sample 9" of "Example 9".

(Example 10)

The black precipitate obtained in a similar manner to "Example 1" was washed with pure water, and then pure water was added to the washed black precipitate without drying so that an aqueous solution of the black precipitate having a concentration of 50 g/L was obtained, and the aqueous solution was stirred to prepare a slurry. The slurry was transferred to a beaker, and a 3 N aqueous sodium hydroxide solution was added to the slurry to adjust the pH to 6.5 to 7.5. After that, the resultant slurry was heated up to 70°C, and stirred for 2 hours while maintaining the temperature. The obtained slurry was filtered, washed, and dried under the conditions of 100°C for 3 hours to obtain "Sample 10" of "Example 10". When measuring the pH of the powder of "Sample 10", the pH value was 3.9.

(Comparative Example 1)

"Comparative Example 1" was performed in accordance with "Example 1" disclosed in "JPH05-264984 A". 3.33 g of bismuth nitrate pentahydrate and 0.72 g of sodium hydroxide were mixed in 34.3 ml of pure water. Further, 2.70 g of sodium thiosulfate pentahydrate was mixed in 27.7 ml of pure water. The latter mixed solution was added to the former mixed solution, the obtained mixed solution was heated at 95°C for 20 hours while stirring, and precipitate was obtained in this mixed solution. The precipitate was collected by suction filtration, washed with pure water, and dried under the conditions of 100°C for 3 hours to obtain "Sample 11" of "Comparative Example 1". The S/Bi molar ratio was 3.3.

The products of "Samples 1 to 8" and "Sample 11", L* values of their powders, and reflectances of their powders are shown in Table 1. Further, the reflectance spectrum of the powder of "Sample 1" is shown in FIG. 1.

[Table 1]

| | Product (XRD) | L* value of powder | Reflectance (%) of powder | | |
|---|---|---|---|---|---|
| | | | 750nm | 1200nm | 1550nm |
| Sample 1 | $Bi_2S_3$ | 6.9 | 7.2 | 58.7 | 84.6 |
| Sample 2 | $Bi_2S_3$ | 18.9 | 10.1 | 76.9 | 87.4 |
| Sample 3 | $Bi_2S_3$ | 8.3 | 7.4 | 64.3 | 85.7 |
| Sample 4 | $Bi_2S_3$ | 16.8 | 8.5 | 61.2 | 85.8 |
| Sample 5 | $Bi_2S_3$ | 15.9 | 10.4 | 77.5 | 85.7 |
| Sample 6 | $Bi_2S_3$ | 11.6 | 7.5 | 59.4 | 84.9 |
| Sample 7 | $Bi_2S_3$ | 19.0 | 9.1 | 51.6 | 84.3 |
| Sample 8 | $Bi_2S_3$ | 18.8 | 9.4 | 44.9 | 76.4 |
| Sample 11 | Non-identifiable | 100.8 | 84.4 | 84.7 | 80.9 |

It was confirmed from the XRD spectra that "Samples 1 to 8" were $Bi_2S_3$. Also, "Sample 11" had a broad peak, and thus could not be identified.

It can be understood from Table 1 that each of the samples (specifically, "Samples 1 to 7") produced with an S/Bi molar ratio of a range from 3.5 to 20 has a value of 22.0 or lower as an L* value of the powder, and has a sufficient degree of blackness. On the other hand, it can be understood that when the S/Bi molar ratio is out of the above range, the L* value is larger than 22.0, and the degree of blackness is not sufficient.

In addition, it can be understood that the sample obtained by changing the bismuth source as a raw material to bismuth nitrate (i.e., "Sample 8") has also an L* value of powder of 22.0 or lower, and has a sufficient degree of blackness.

Further, it can be understood that all of "Samples 1 to 8" have a reflectance at a wavelength of 1200 nm of 30.0% or higher, and have a high infrared reflection characteristic, even while having a sufficient degree of blackness. In addition, it can be understood that all of "Samples 1 to 8" have a reflectance at a wavelength of 1550 nm of 50.0% or higher, and have a high infrared reflection characteristic. Further, it can be understood that all of "Samples 1 to 8" have a reflectance at a wavelength of 750 nm of 15.0% or lower, and have a low visible light reflectance.

<Physical property evaluation of paint film>

By using "Sample 1, 9, or 10" that sufficiently exhibited the black infrared reflection characteristic, a paint composition and a paint film were prepared as described below, and the L* value and the solar reflectance at a wavelength of from 780 nm to 2500 nm were measured. As a reference example, commercially available carbon black (specifically, "trade name MA-100: manufactured by Mitsubishi Chemical Corporation") was used.

<Preparation of paint composition>

By using "Sample 1, 9, or 10", each paint composition was prepared at a pigment weight concentration (i.e., PWC) of 29.60%. Specifically, in accordance with Table 2, each raw material was placed in a 100-ml mayonnaise bottle, and stirred using an agitator (specifically, "trade name SM-101: manufactured by AS ONE Corporation") to prepare a mill base. Next, 15.6 g of alkyd resin (specifically, "ALUKIDIR (registered trademark) J-524-IM-60: manufactured by DIC Corporation") was added to the above mill base, and the obtained mixture was stirred with an agitator (specifically, "trade name SM-101: manufactured by AS ONE Corporation") to prepare a paint composition.

[Table 2]

| Sample 1, 9, or 10 | 5.2g |
|---|---|
| Amino resin (AMIDIR (registered trademark) J-820-60: manufactured by DIC Corporation) | 5.0g |
| Xylene (manufactured by NACALAI TESQUE, INC.) | 1.9g |
| 1-Butanol (manufactured by NACALAI TESQUE, INC.) | 1.9g |

<Preparation of paint composition using carbon black ("Reference Example")>

By using the commercially available carbon black (specifically, "trade name MA-100: manufactured by Mitsubishi Chemical Corporation"), a paint composition was prepared at a pigment volume concentration (i.e., PVC) of 5.8%. Specifically, in accordance with Table 3, each raw material was placed in a 100-ml mayonnaise bottle, and dispersed using a paint conditioner (manufactured by Red Devil Inc.) to prepare a mill base. Next, 20.0 g of alkyd resin (specifically, "ALUKIDIR (registered trademark) J-524-IM-60: manufactured by DIC Corporation") was added to the above mill base, and the obtained mixture was dispersed with a paint conditioner (manufactured by Red Devil Inc.) to prepare a paint composition.

[Table 3]

| Commercially available carbon black | 1.4g |
|---|---|
| Amino resin (AMIDIR (registered trademark) J-820-60: manufactured by DIC Corporation) | 6.5g |
| Xylene (manufactured by NACALAI TESQUE, INC.) | 2.0g |
| 1-Butanol (manufactured by NACALAI TESQUE, INC.) | 2.0g |

<Preparation of paint film>

A paint composition of "Sample 1, 9, or 10" or the commercially available carbon black was applied each onto contrast ratio test paper (specifically, "JIS accepted product: manufactured by Motofuji Co., Ltd. ") by means of a bar coater with wire number 60. The resultant paint composition was left to stand for 30 minutes, and then dried at 110°C for 40 minutes by means of a dryer (specifically, "trade name DRM-620DA: manufactured by ADVANTEC Co., LTD.") to prepare a dried paint film having a thickness of 67 $\mu$m.

<Measurement of L* value of paint film>

For the above paint film, the L* value (L* value on a white background) in the L*a*b* color system was measured using a portable color-difference meter (specifically, "trade name RM-200QC: manufactured by X-Rite, Inc.").

<Measurement of solar reflectance of paint film>

The above paint film was attached to an integrating sphere unit (specifically, "trade name ISN-923 type manufactured by JASCO Corporation"), and the reflectance (i.e., reflectance on a white background) at a wavelength of from 780 nm to 2500 nm of the paint film was measured using a UV-Visible/NIR spectrophotometer V-770 (trade name) manufactured by JASCO Corporation. The measurement data were used to calculate the solar reflectance of the paint film at a wavelength of from 780 nm to 2500 nm by means of precalculated weight coefficient described in JIS K 5602.

The L* value of the paint film using "Sample 1" was 6.6, and the solar reflectance of the paint film at a wavelength of from 780 nm to 2500 nm was 38.4%.

The L* value of the paint film using "Sample 9" was 5.9, and the solar reflectance of the paint film at a wavelength of from 780 nm to 2500 nm was 38.9%.

The L* value of the paint film using "Sample 10" was 5.0, and the solar reflectance of the paint film at a wavelength of from 780 nm to 2500 nm was 38.7%.

It can be understood that each paint film using "Sample 1, 9, or 10" has an L* value of 10.0 or lower, and has a degree of blackness that is generally required for the black paint film.

Further, it can be understood that each paint film using "Sample 1, 9, or 10" has a solar reflectance of 20.0% or higher, and has an infrared reflection characteristic that is generally required for the infrared reflection paint film.

A solar reflectance of the paint film using the commercially available carbon black was 3.97%. Thus, it can be understood that the solar reflectance of the paint film using the commercially available carbon black is smaller than that of the paint film using the bismuth sulfide particle according to the present invention, and does not have any infrared reflection characteristic that is generally required for the infrared reflection paint film.

<Evaluation of temperature of paint film>

By using "Sample 1" or the commercially available carbon black, each paint composition and each paint film were prepared as described above, and the surface temperature of each paint film after the irradiation with infrared rays was measured.

<Measurement of surface temperature of paint film>

For the above each paint film, a piece having a 75 mm square was cut out therefrom, irradiated for 20 minutes from the position 400 mm in the upper part direction from a surface of the paint film with an infrared ray lamp (specifically, "Eye R-type infrared lamp (trade name) manufactured by IWASAKI ELECTRIC Co., Ltd.": 250 W), and the surface temperature of the paint film was measured.
The surface temperature of the paint film using Sample 1 after the irradiation with infrared rays was 59°C.
The surface temperature of the paint film using the commercially available carbon black after the irradiation with infrared rays was 78°C. Thus, it can be understood that the surface temperature of the paint film using the bismuth sulfide of the present invention is lower than that of the paint film using the commercially available carbon black.

<Evaluation for weather resistance of paint film>

By using "Sample 1" or the commercially available carbon black, each paint composition and each paint film were prepared as described above, and the weather resistance of each paint film was evaluated. For the above each paint film, the time required until the color difference of the paint film between before and after exposure test reached 5 or higher was measured.

<Preparation of test piece for exposure test>

The paint composition of "Sample 1" or the commercially available carbon black was applied onto a primer (specifically, zinc phosphate) treated steel sheet by means of a bar coater so that the dried film thickness is about 67 $\mu$m, and baked at 110°C for 40 minutes to prepare each test piece for exposure test on "Sample 1" and the commercially available carbon black.

<Calculation of color difference of paint film between before and after exposure test>

The above each test piece was subjected to accelerated exposure by water jetting at regular intervals while irradiating with light by means of a sunshine weather meter (specifically, "S80 (trade name) manufactured by Suga Test Instruments Co., Ltd."). The color was measured at regular intervals by means of a colorimeter (specifically, "spectrophotometer SD5000 (trade name) manufactured by NIPPON DENSHOKU INDUSTRIES CO., LTD."), and the color difference was calculated by a method in accordance with JIS K 5600.
It can be understood that the paint film using "Sample 1" requires 600 hours until the color difference of the paint film between before and after exposure test reaches 5 or higher, and the weather resistance is good.
The paint film using the commercially available carbon black required 180 hours until the color difference of the paint film between before and after exposure test reached 5 or higher.

**INDUSTRIAL APPLICABILITY**

The bismuth sulfide particle according to the present invention has a high degree of blackness with an L* value of 22.0 or lower in the L*a*b* color system, and thus is useful as a black pigment. In addition, the bismuth sulfide particle according to the present invention has a high infrared reflectance with a reflectance at a wavelength of 1200 nm of 30.0% or higher, and thus is useful as an infrared reflective material.

**Claims**

1.   A bismuth sulfide particle having a value of 22.0 or lower as an L* value of a powder of the bismuth sulfide particle in an L*a*b* color system; obtainable by mixing a bismuth compound and a sulfur compound in an aqueous dispersion medium so that a ratio of the number of moles of sulfur atoms to the number of moles of bismuth atoms, a S/Bi molar ratio, is a range from 3.5 or higher to 20 or lower; and then heating the mixture at a temperature from 30 °C or higher to 120 °C or lower.

2. The bismuth sulfide particle according to claim 1, wherein a reflectance at a wavelength of 1200 nm is 30.0% or higher.

3. The bismuth sulfide particle according to claim 1 or 2, wherein a reflectance at a wavelength of 750 nm is 15.0% or lower.

4. The bismuth sulfide particle according to any one of claims 1 to 3, wherein a reflectance at a wavelength of 1550 nm is 50.0% or higher.

5. An infrared reflective material comprising the bismuth sulfide particle according to any one of claims 1 to 4.

6. A laser reflective material for laser imaging detection and ranging (i.e., LiDAR) comprising the bismuth sulfide particle according to any one of claims 1 to 4.

7. A solvent composition comprising: the bismuth sulfide particle according to any one of claims 1 to 4; and a solvent.

8. A resin composition comprising: the bismuth sulfide particle according to any one of claims 1 to 4; and a resin.

9. A paint composition comprising: the bismuth sulfide particle according to any one of claims 1 to 4; and a resin for a paint.

10. A paint film comprising the paint composition according to claim 9.

11. A method for producing a bismuth sulfide particle, comprising the steps of: mixing a bismuth compound and a sulfur compound in an aqueous dispersion medium so that a ratio of the number of moles of sulfur atoms to the number of moles of bismuth atoms (i.e., a S/Bi molar ratio) is a range from 3.5 or higher to 20 or lower; and then heating the mixture at a temperature from 30 °C or higher to 120 °C or lower.

**Patentansprüche**

1. Wismutsulfidpartikel mit einem Wert von 22,0 oder niedriger als ein L*-Wert eines Pulvers des Wismutsulfidpartikels in einem L*a*b*-Farbsystem; erhältlich durch Mischen einer Wismutverbindung und einer Schwefelverbindung in einem wässrigen Dispersionsmedium, so dass ein Verhältnis der Molzahl von Schwefelatomen zur Molzahl von Wismutatomen, ein S/Bi-Molverhältnis, im Bereich von 3,5 oder höher bis 20 oder niedriger liegt; und anschließendes Erwärmen der Mischung auf eine Temperatur von 30 °C oder höher bis 120 °C oder niedriger.

2. Wismutsulfidpartikel nach Anspruch 1, wobei ein Reflexionsgrad bei einer Wellenlänge von 1200 nm 30,0 % oder mehr beträgt.

3. Wismutsulfidpartikel nach Anspruch 1 oder 2, wobei ein Reflexionsgrad bei einer Wellenlänge von 750 nm 15,0 % oder weniger beträgt.

4. Wismutsulfidpartikel nach einem der Ansprüche 1 bis 3, wobei ein Reflexionsgrad bei einer Wellenlänge von 1550 nm 50,0 % oder mehr beträgt.

5. Infrarotreflektierendes Material, umfassend das Wismutsulfidpartikel nach einem der Ansprüche 1 bis 4.

6. Laserreflektierendes Material für Light Detection and Ranging (LiDAR), umfassend das Wismutsulfidpartikel nach einem der Ansprüche 1 bis 4.

7. Lösemittelzusammensetzung, umfassend: das Wismutsulfidpartikel nach einem der Ansprüche 1 bis 4; und ein Lösemittel.

8. Harzzusammensetzung, umfassend: das Wismutsulfidpartikel nach einem der Ansprüche 1 bis 4; und ein Harz.

9. Farbenzusammensetzung, umfassend: das Wismutsulfidpartikel nach einem der Ansprüche 1 bis 4; und ein Harz für eine Farbe.

10. Farbenfilm, umfassend die Farbenzusammensetzung nach Anspruch 9.

11. Verfahren zum Herstellen eines Wismutsulfidpartikels, umfassend die Schritte zum: Mischen einer Wismutverbindung und einer Schwefelverbindung in einem wässrigen Dispersionsmedium, so dass ein Verhältnis der Molzahl von Schwefelatomen zur Molzahl von Wismutatomen (das heißt ein S/Bi-Molverhältnis) im Bereich von 3,5 oder höher bis 20 oder niedriger liegt; und anschließendes Erwärmen der Mischung auf eine Temperatur von 30 °C oder mehr bis 120 °C oder weniger.

## Revendications

1. Particule de sulfure de bismuth ayant une valeur de 22,0 ou moins comme valeur L* d'une poudre de la particule de sulfure de bismuth dans un système chromatique L*a*b* ; qui peut être obtenue en mélangeant un composé de bismuth et un composé de soufre dans un milieu de dispersion aqueux, de sorte qu'un rapport entre le nombre de moles d'atomes de soufre et le nombre de moles d'atomes de bismuth, un rapport molaire S/Bi, est une plage allant de 3,5 ou plus à 20 ou moins ; puis en chauffant le mélange à une température allant de 30 °C ou plus à 120 °C ou moins.

2. Particule de sulfure de bismuth selon la revendication 1, dans laquelle une réflectance à une longueur d'onde de 1 200 nm est de 30,0 % ou plus.

3. Particule de sulfure de bismuth selon la revendication 1 ou 2, dans laquelle une réflectance à une longueur d'onde de 750 nm est de 15,0 % ou moins.

4. Particule de sulfure de bismuth selon l'une quelconque des revendications 1 à 3, dans laquelle une réflectance à une longueur d'onde de 1 550 nm est de 50,0 % ou plus.

5. Matériau à réflectivité infrarouge comprenant la particule de sulfure de bismuth selon l'une quelconque des revendications 1 à 4.

6. Matériau à réflectivité laser pour une détection et une télémétrie par imagerie laser (c'est-à-dire LiDAR) comprenant la particule de sulfure de bismuth selon l'une quelconque des revendications 1 à 4.

7. Composition de solvant comprenant : la particule de sulfure de bismuth selon l'une quelconque des revendications 1 à 4 ; et un solvant.

8. Composition de résine comprenant : la particule de sulfure de bismuth selon l'une quelconque des revendications 1 à 4 ; et une résine.

9. Composition de peinture comprenant : la particule de sulfure de bismuth selon l'une quelconque des revendications 1 à 4 ; et une résine pour peinture.

10. Film de peinture comprenant la composition de peinture selon la revendication 9.

11. Procédé pour produire une particule de sulfure de bismuth, comprenant les étapes consistant à : mélanger un composé de bismuth et un composé de soufre dans un milieu de dispersion aqueux, de sorte qu'un rapport entre le nombre de moles d'atomes de soufre et le nombre de moles d'atomes de bismuth (c'est-à-dire un rapport molaire S/Bi) est une plage allant de 3,5 ou plus à 20 ou moins ; puis chauffer le mélange à une température allant de 30 °C ou plus à 120 °C ou moins.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05264984 A
- CN 107098387 A
- CN 102965735 A
- JP 2004205603 A
- JP H0834946 A

**Non-patent literature cited in the description**

- *Materials Letters*, 2009, vol. 63, 1496-1498
- *Materials Letters*, 2003, vol. 57, 4555-4559
- *Materials Letters*, 2007, vol. 62, 243-245